# EUROPEAN PATENT APPLICATION

(11) **EP 2 792 480 A1**
(43) Date of publication of application: **22.10.2014**
(21) Application number: 12857602.2
(22) Date of filing: 14.12.2012
(51) Int. Cl.: B32B 5/24, B32B 17/04, B60R 13/02, E04F 13/18

(54) **FIBRE-REINFORCED RESIN MOULDING, AND VEHICLE INTERIOR MATERIAL USING SAME**

(30) Priority: 16.12.2011 JP 2011276124
(71) Applicant: Kurashiki Boseki Kabushiki Kaisha, Kurashiki-shi, Okayama 710-0054 (JP)
(72) Inventor: MIHARA Ayako, Osaka 572-0823 (JP); KASUYA Akira, Osaka-shi, Osaka 541-8581 (JP)
(74) Representative: de Bresser, Sara Jean
(86) International application number: PCT/JP2012/082528
(87) International publication number: WO 2013/089235

(57) **Abstract**

A fiber-reinforced resin molded article 10 of the present invention includes fiber sheets 1, 3 and a resin foam sheet 2 attached to each other. The fiber sheets 1, 3 are respectively disposed on principal planes on both sides of the resin foam sheet 2, and at least one of the fiber sheets is formed of a glass fiber nonwoven fabric. The fiber-reinforced resin molded article 10 is used as an interior material for a vehicle. According to the present invention, a fiber-reinforced resin molded article in which wrinkles on a surface are reduced and an interior material for a vehicle using the article can be provided.

## Description

### Technical Field

The present invention relates to a fiber-reinforced resin molded article and an interior material for a vehicle using the article, and specifically to a fiber-reinforced resin molded article including fiber sheets and a resin foam sheet attached to each other and an interior material for a vehicle using the article.

### Background Art

Fiber-reinforced plastics obtained by mixing reinforced fibers with plastics are used for interior materials for vehicles such as automobiles because they are lightweight and have high strength. As a fiber-reinforced plastic, for example, a high-strength sheet has been used, which is obtained as follows: an emulsion resin, a thermosetting resin, a thermoplastic resin, or the like, which serves as a matrix resin, is impregnated in and applied to a fiber having a relatively high melting point, such as an aramid fiber, a polyphenylene sulfide (PPS) fiber, and a polyester fiber, which serves as a reinforcing fiber, followed by integral extrusion molding, film lamination molding, or the like, thereby obtaining a high-strength sheet (Patent Document 1, etc.).

Further, in order to impart characteristics of other materials to fiber-reinforced plastics, molded articles have been proposed in which fiber-reinforced plastics and other materials are conjugated. For example, Patent Document 2 proposes a fiber-reinforced plastic structure including a foamed core material and a skin layer made of a fiber-reinforced plastic.

### Prior Art Document

### Patent Document

Patent document 1: JP 5(1993)-44146 A
Patent document 2: JP 2004-306398 A

### Disclosure of Invention

### Problem to be Solved by the Invention

Inventors of the present invention studied the above-mentioned fiber-reinforced resin molded article and found a problem in that, when a fiber-reinforced plastic is attached to a resin foam sheet to form a fiber-reinforced resin molded article having a predetermined shape by compression molding, wrinkles are formed on the surface of the fiber-reinforced resin molded article due to the reinforcing fibers in the fiber-reinforced plastic.

In order to solve the above-mentioned problem, the present invention provides a fiber-reinforced resin molded article in which wrinkles on a surface are reduced and an interior material for a vehicle using the article.

### Means for Solving Problem

A fiber-reinforced resin molded article of the present invention includes a fiber sheet and a resin foam sheet attached to each other. The fiber sheet is disposed on a principal plane on each side of the resin foam sheet, and at least one of the fiber sheets is formed of a glass fiber nonwoven fabric.

An interior material for a vehicle of the present invention is formed of the above-mentioned fiber-reinforced resin molded article.

### Effects of the Invention

The present invention can provide a fiber-reinforced resin molded article in which wrinkles on a surface are reduced by disposing a glass fiber nonwoven fabric on at least one principal plane of a resin foam sheet in a fiber-reinforced resin molded article including fiber sheets and the resin foam sheet attached to each other. In particular, the fiber-reinforced resin molded article of the present invention is suitable as interior materials for vehicles such as automobiles, interior materials for ships, interior materials for houses, and the like.

### Brief Description of Drawings

[FIG. 1] FIG. 1 is a schematic sectional view of a fiber-reinforced resin molded article which is an example of the present invention.
[FIG. 2] FIG. 2 is an exploded perspective view showing a production process of a multiaxial warp knitted fabric used in the present invention.
[FIG. 3] FIGS. 3A to 3C are conceptual perspective views showing primary molding for producing a fiber-reinforced resin molded article of the present invention.
[FIG. 4] FIGS. 4A and 4B are conceptual perspective views showing secondary molding for producing the fiber-reinforced resin molded article of the present invention.
[FIG. 5] FIG. 5 is an exploded perspective view of a fiber-reinforced resin molded article according to an example of the present invention.
[FIG. 6] FIG. 6 is an exploded perspective view of a fiber-reinforced resin molded article according to an example of the present invention.
[FIG. 7] FIG. 7 is an exploded perspective view of a fiber-reinforced resin molded article according to a comparative example of the present invention.
[FIG. 8] FIG. 8A is a perspective view of a fiber-reinforced resin molded article according to an example of the present invention, and FIG. 8B is a schematic sectional view taken along a-a line of FIG. 8A.
[FIG. 9] FIG. 9A is a perspective view of a fiber-reinforced resin molded article according to another example of the present invention, and FIG. 9B is a schematic sectional view taken along a-a line of FIG. 9A.
[FIG. 10] FIG. 10A is a perspective view of a fiber-reinforced resin molded article of still another example of the present invention, and FIG. 10B is a schematic sectional view taken along a-a line of FIG. 10A.
[FIG. 11] FIGS. 11A and 11B are respectively exploded perspective views of multiaxial warp knitted fabrics used in the present invention.

### Description of the Invention

The inventors of the present invention earnestly studied the problem in that, when a fiber-reinforced resin sheet and a resin foam sheet are attached to each other to form a fiber-reinforced resin molded article having a predetermined shape by compression molding, wrinkles are formed on the surface of the fiber-reinforced resin molded article. As a result, the inventors of the present invention found that wrinkles are formed on the surface of the fiber-reinforced resin molded article for the following reasons: reinforcing fibers in the fiber-reinforced resin sheet are continuous fibers and hence are bent or buckled by compression molding; and in particular when a resin foam sheet having low density is used, wrinkles cannot be suppressed because the resin foam sheet is soft. Then, the inventors of the present invention found that wrinkles can be prevented from being formed on the surface of the fiber-reinforced resin molded article by disposing a glass fiber nonwoven fabric on a principal plane of the resin foam sheet, thereby achieving the present invention.

Hereinafter, the fiber-reinforced resin molded article of the present invention is described in detail with reference to the drawings.

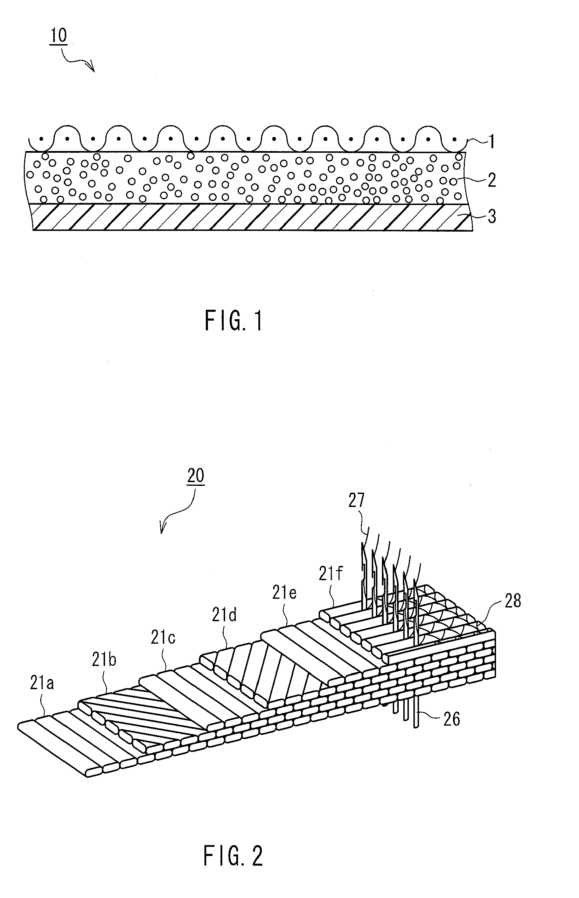

FIG. 1 is a schematic sectional view of the fiber-reinforced resin molded article of the present invention. In a fiber-reinforced resin molded article 10 of the present invention, fiber sheets 1, 3 are respectively disposed on principal planes on both sides of a resin foam sheet 2, and at least one of the fiber sheets 1, 3 is formed of a glass fiber nonwoven fabric. Further, one of the fiber sheets 1, 3 may be a glass fiber nonwoven fabric, and the other of the fiber sheets 1, 3 may be a fiber sheet other than the glass fiber nonwoven fabric (hereinafter, the fiber sheet other than the glass fiber nonwoven fabric is also referred to as "the other fiber sheet").

The fiber-reinforced resin molded article of the present invention has a so-called sandwich structure in which fiber sheets are respectively disposed on principal planes on both sides of the resin foam sheet. In the present invention, the principal plane refers to a plane having a large area. Specifically, the principal planes on both sides of the resin foam sheet refer to a so-called front surface and a back surface of the resin foam sheet. That is, the present invention has a configuration in which fiber sheets are respectively disposed on the front surface and the back surface of the resin foam sheet. It should be noted that, in the case of using the above-mentioned fiber-reinforced resin molded article as a ceiling material for a vehicle, a surface on an indoor side corresponds to a front surface, and a surface on an outdoor side corresponds to a back surface. Further, a material appearing on the indoor side is referred to as a surface material or a skin material. In a fiber sheet and a fiber-reinforced resin molded article, what is called, a front surface and a back surface similarly serve as principal planes.

### <Glass fiber nonwoven fabric>

A method for producing a glass fiber nonwoven fabric is not particularly limited. For example, a glass fiber nonwoven fabric can be produced by a wet paper making method through use of a cylinder paper machine, a fourdrinier paper machine, an inclined type paper machine, or a combination type paper machine obtained by combining two or more kinds of paper machines. In the glass fiber nonwoven fabric, although the fiber length of glass fibers is not particularly limited, it is preferably 5 to 50 mm, more preferably 10 to 30 mm from the viewpoint of the glass fiber nonwoven fabric being excellent in preventing wrinkles.

Although the mass per unit area of the glass fiber nonwoven fabric is not particularly limited, it is preferably 10 to 70 g/m², more preferably 15 to 45 g/m² from the viewpoint of physical strength. It should be noted that the thickness of the glass fiber nonwoven fabric is generally about 0.05 to 1.5 mm.

As the glass fiber nonwoven fabric, for example, a commercially available fabric such as GF surface mat (product No. "FC-30SK") manufactured by Central Glass Co., Ltd. can be used.

### <The other fiber sheet>

Although the fiber sheet other than the glass fiber nonwoven fabric is not particularly limited, it is preferably formed of conjugate fibers containing a low melting point polymer component and a high melting point polymer component. The conjugate fiber as used herein refers to a fiber obtained as follows, for example: a plurality of polymer components guided individually to a spinneret are combined and extruded from the spinneret, followed by drawing. Examples of the structure of the conjugate fiber include a core-sheath structure, a sea-island structure, a side-by-side structure, and the like, and any structure is available. The conjugate fiber may be a filament yarn or a spun yarn composed of a fiber made of a high melting point polymer component and a fiber made of a low melting point component.

In the fiber-reinforced resin molded article of the present invention, the low melting point polymer component serves as a matrix resin, and the high melting point polymer component serves as a reinforced fiber. The matrix resin also is called a base resin. The matrix resin and the reinforcing fiber form a fiber-reinforced resin, which is called a fiber-reinforced plastic (FRP).

It is preferred that, as the low melting point polymer component and the high melting point polymer component, thermoplastic resins that are polymers of the same type be used. The polymers of the same type refer to polymers composed of the same components such as polyolefins, polyesters, and polyamides. These polymer components may be selected not only from homopolymers but also from copolymers (including multi-component copolymers such as binary copolymers and ternary copolymers). Polyolefin is a polymer or a copolymer of a hydrocarbon compound of ethylene series, such as polyethylene, polypropylene, polybutene, and copolymers thereof. Polyamide, which generally is referred to as nylon, is a linear synthetic polymer having an amide bond, and nylon 66, nylon 6,10, nylon 6, nylon 11, and nylon 12 have been commercialized. Polyester is a generic name for polymers having an ester bond in a main chain. Examples thereof include polyethylene terephthalate, polytrimethylene terephthalate, and polybutylene terephthalate. Besides those examples, polycarbonate, an unsaturated polyester resin, an alkyd resin, and the like can also be used.

The conjugate fiber preferably contains the high melting point polymer component in a range of 50 to 90 mass% and the low melting point polymer component in a range of 10 to 50 mass%. When the respective polymer components are within these ranges, a higher proportion of the reinforcing fiber can be included, thereby increasing strength and easily balancing the matrix resin and the reinforcing fiber when they form FRP.

A difference in melting point between the low melting point polymer component and the high melting point polymer component of the conjugate fiber is preferably 20°C or more and more preferably 30°C or more. With a difference in melting point of 20°C or more, the high melting point polymer easily functions as the reinforcing fiber, while the low melting point polymer component easily functions as the matrix resin when the sheet is subjected to compression molding to form a fiber-reinforced resin molded article.

Both the low melting point polymer component and the high melting point polymer component of the conjugate fiber are preferably polyolefin. Polyolefin (olefin-based polymer) is lightweight, is excellent in strength and durability, and is easily recycled and disposed of when no longer needed. For example, it is preferred that the high melting point polymer component be polypropylene, and the low melting point polymer component be polyethylene. The specific gravity of polypropylene, which varies depending on the manufacturing method, is generally 0.902 to 0.910. The specific gravity of polyethylene, which also varies depending on the manufacturing method, is generally 0.910 to 0.970. Thus, the specific gravity of the conjugate fiber using polypropylene as the high melting point polymer component and polyethylene as the low melting point polymer component is extremely low, i.e., in a range of about 0.9 to 0.95.

The other fiber sheet includes at least one layer of a unidirectional sheet in which the conjugate fibers are arranged in one direction. In the case of a monolayer, the sheet forms a uniaxial fiber sheet and in the case of two or more layers, the sheet forms a multiaxial fiber sheet. Further, it is preferred that the other fiber sheet be connected with a stitching yarn from the viewpoint of a shape keeping property during thermal compression molding. In the case where the uniaxial fiber sheet is connected with a stitching yarn, the sheet takes a reed screen-like form. In the case where the multiaxial fiber base is connected with a stitching yarn, the sheet forms a multiaxial warp knitted fabric. Herein, "connection" is intended to keep the sheet in shape so as to prevent a plurality of the conjugate fibers that are aligned in parallel to form the sheet from coming apart in the case of a monolayer, or to keep the sheet in shape so as to prevent layers, in addition to the case of the monolayer as above, from coming apart in the case of a multilayer. The sheet can be kept (connected) in shape by thermal adhesion without using a stitching yarn.

The above-mentioned stitching yarn can be a polypropylene yarn, a polyethylene yarn, a polyester yarn, or the like, and preferably is composed of a fiber made of a polymer of the same type as the low melting point polymer component and the high melting point polymer component of the above-mentioned conjugate fiber. For example, in the case where the high melting point polymer component is polypropylene, and the low melting point polymer component is polyethylene in the conjugate fiber, the stitching yarn is preferably a polypropylene yarn or a conjugate yarn containing polypropylene as a core component and polyethylene as a sheath component. In the case where no stitching yarn is used, or the case where only the low melting point polymer component is present, the arrangement may be disturbed in a reinforcing fiber portion when heat is applied during compression molding, which may result in a fiber-reinforced resin molded article having nonuniform strength. This phenomenon is observed especially when a fiber-reinforced resin molded article with a very uneven surface is manufactured, i.e., when deep drawing molding is performed. In order to prevent such nonuniformity, it is preferred to use a stitching yarn whose melting point is as high as that of the high melting point polymer component or is about 20°C higher than that of the low melting point polymer component. It should be noted that the stitching method may be a chain stitch, a tricot stitch, or the like.

FIG. 2 is a schematic perspective view of a multiaxial warp knitted fabric which is an example of the other fiber sheet. In a multiaxial warp knitted fabric 20, conjugate fibers (yarns) 21a to 21f respectively arranged in different directions form respective unidirectional sheets, which are stitched (bound) in a thickness direction with stitching yarns 27 and 28 threaded through a knitting needle 26 so as to be integrated. When a multiaxial warp knitted fabric including a plurality of unidirectional sheets in which the arrangement directions of conjugate fibers are different is used, it is possible to provide a fiber-reinforced resin molded article having an excellent strengthening effect in multiple directions. A plurality of unidirectional sheets may be integrated by using a thermal adhesive yarn or a binder such as a hot melt film instead of using the stitching yarns 27 and 28 or using the stitching yarns 27 and 28 in combination with a thermal adhesive yarn or a binder such as a hot melt film.

It is preferred that the above-mentioned other fiber sheet be a multiaxial warp knitted fabric from the viewpoint of obtaining an excellent reinforcing effect in multiple directions. This is because the multiaxial warp knitted fabric has high fiber orientation. The preferred mass per unit area and thickness of the other fiber sheet to be used in the present invention are not limited particularly. The mass per unit area of one layer is about 10 to 150 g/m², and the mass per unit area of the fiber sheet as a whole is about 10 to 600 g/m². The thickness of one layer is about 0.1 to 0.5 mm, and the thickness of the fiber sheet as a whole is about 0.2 to 2 mm.

### <Resin foam sheet>

As the resin foam sheet, for example, a resin foam sheet composed of a resin foam such as a polyurethane foam, a polyolefin foam, a polystyrene foam, or an ethylene-vinyl acetate (EVA) copolymer foam can be used. As the polyolefm foam sheet, it is preferred to use a polypropylene foam sheet, a polyethylene foam sheet, or the like from the viewpoint of recycling, and a polypropylene foam sheet is preferably used in particular from the viewpoint of heat resistance. As the polypropylene foam sheet, those which are commercially available, for example, "P-Block" manufactured by JSP, can be used. As the polystyrene foam sheet, those which are commercially available, for example, "Styrodia" manufactured by JSP, can be used. Further, it is preferred that the resin foam sheet be formed of a polymer of the same type as a resin in a fiber sheet. This is because, due to heat applied during compression molding, the low melting point component of the fiber sheet can serve as an adhesive or the like to attach the fiber sheet to the resin foam sheet so as to integrate them without providing an adhesive separately.

The expansion ratio of the resin foam sheet may be selected arbitrarily depending on the use purpose of a fiber-reinforced resin molded article, and is preferably 10 to 100 times in the case of using a fiber-reinforced resin molded article as an interior material for a vehicle. In particular, in the case of a polyolefm foam sheet, the expansion ratio is preferably about 15 to 60 times. Further, the thickness of the resin foam sheet is, for example, about 1 to 300 mm. In the case of an interior material for a vehicle, the thickness of the resin foam sheet is about 2 to 15 mm, more preferably 2 to 10 mm from the viewpoint of lightness and ease of forming. Further, the density of the resin foam sheet is preferably 0.009 to 0.09 g/cm³, more preferably 0.015 to 0.06 g/cm³ from the viewpoint of lightness. It should be noted that, in the case of using a resin foam sheet having a density of 0.015 to 0.06 g/cm³, the effect of preventing wrinkles of the present invention can be exhibited particularly effectively.

### <Adhesive layer>

It is preferred to provide an adhesive layer between the resin foam sheet and the glass fiber nonwoven fabric. The adhesive layer can enhance strength as well as adhesion. The adhesive layer is not particularly limited as long as it has adhesion, and it is preferred that the adhesive layer be formed of a hot-melt adhesive for the reason that the resin foam sheet and the glass fiber nonwoven fabric can be attached to each other simultaneously with compression molding. As the hot-melt adhesive, for example, a vinyl acetate-ethylene copolymer based hot-melt adhesive, an olefin-based hot-melt adhesive, a polyamide-based hot-melt adhesive, an ester-based hot-melt adhesive, a polyisobutyrene-based hot-melt adhesive, or the like can be used. Further, as the adhesive, a film-shaped adhesive may be used. As the film-shaped hot-melt adhesive, for example, an adhesive film such as a low density polyethylene film or a low melting point nylon film can be used.

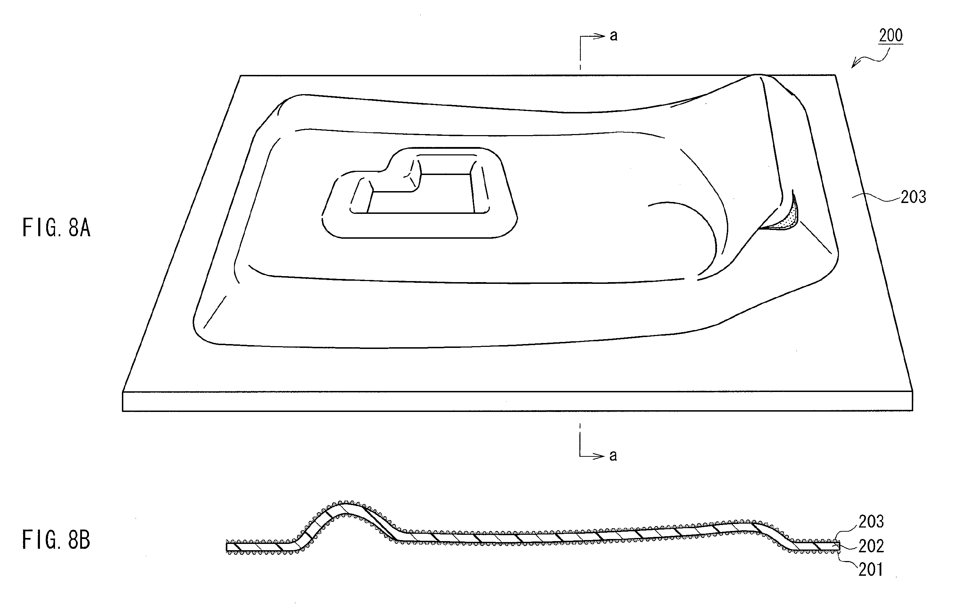

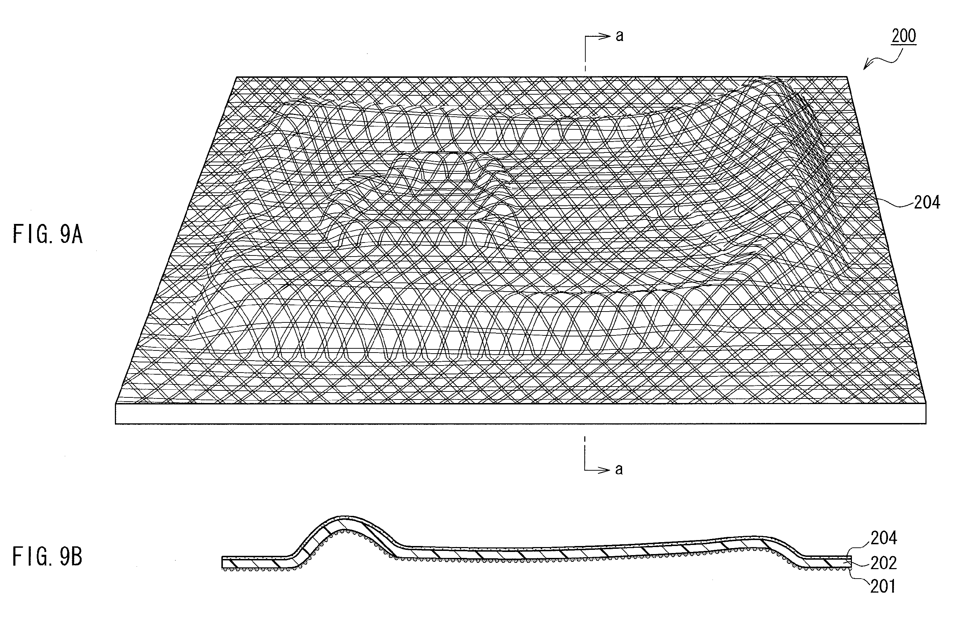

It is preferred that the fiber-reinforced resin molded article have a configuration in which a glass fiber nonwoven fabric is disposed on one principal plane of the resin foam sheet, and a multiaxial warp knitted fabric is disposed on the other principal plane, from the viewpoint of preventing wrinkles from being formed on a surface and having excellent moldability during deep drawing molding. In the present invention, "deep drawing molding" refers to a molding method for allowing a side wall to be formed by inflow from a surrounding. The formation of wrinkles can be prevented by disposing a glass fiber nonwoven fabric on principal planes on both sides of a resin foam sheet; however, a fiber-reinforced resin molded article may be cracked as shown in FIG. 8 in the case of deep drawing molding. The cracking of a fiber-reinforced resin molded article during deep drawing molding is assumed to be caused by the difference in elongation between the glass fibers of the glass fiber nonwoven fabric and the resin of the resin foam sheet. By disposing a glass fiber nonwoven fabric on one principal plane of the resin foam sheet and disposing a multiaxial warp knitted fabric on the other principal plane, the multiaxial warp knitted fabric can prevent the cracking of the fiber-reinforced resin molded articles that is likely to occur during deep drawing molding as shown in FIG. 9, while the glass fiber nonwoven fabric prevents the formation of wrinkles on the surface of the fiber-reinforced resin molded article.

In the case of using the fiber-reinforced resin molded article as an interior material for a vehicle, the appearance can be improved by using the surface on which the glass fiber nonwoven fabric is disposed as the front surface.

The mass per unit area of the fiber-reinforced resin molded article is preferably 1 kg/m² or less, more preferably 0.5 kg/m² or less, further preferably 0.3 kg/m² or less from the viewpoint of lightness. The fiber-reinforced resin molded article has excellent stiffness, and the bending elastic gradient is preferably 25 N/cm or more, more preferably 30 N/cm or more. In the present invention, the bending elastic gradient refers to a resistance to a load applied in a thickness direction, and is measured as follows. Initially, a three-point bending test is performed on a specimen having a width of 50 mm and a length of 150 mm according to JIS K 7221-2 at a test rate of 50 mm/min with a span length of 100 mm. Then, using a load (N)-deflection (cm) curve thus obtained, the elastic gradient (N/cm) is calculated from a tangent to the curve at a point where the curve has the largest gradient.

The fiber-reinforced resin molded article can be obtained by disposing fiber sheets respectively on principal planes on both sides of the resin foam sheet and subjecting the resultant laminate to compression molding. In the case where both the fiber sheets are formed of a glass fiber nonwoven fabric, it is preferred to heat the laminate to 120°C to 140°C and subject the laminate to compression molding, although not limited thereto. In the case where one of the fiber sheets is formed of a glass fiber nonwoven fabric and the other is formed of a multiaxial warp knitted fabric, it is preferred to heat the laminate to a temperature equal to or more than the melting point of the low melting point polymer component in the multiaxial warp knitted fabric and less than the melting point of the high melting point polymer component and subject the laminate to compression molding. The above-mentioned compression molding may be heat roller press molding in which the sheets are allowed to pass between heat rollers, but is generally compression molding that uses a mechanism that raises or lowers a mold or a heating plate using a cam, a toggle, pneumatic or oil pressure, or the like, thereby forming the sheets into a desired shape. Compression molding also can be used in applications where deep drawing molding is required, such as a molded ceiling and a door trim. Compression molding can be performed in combination with vacuum molding or decompression molding. It should be noted that compressing molding is also called press molding.

Further, it is preferred to perform preforming before compression molding into a predetermined shape from the viewpoint of enhancing integrity and strength of a fiber-reinforced resin molded article. That is, it is preferred to dispose fiber sheets respectively on principal planes on both sides of the resin foam sheet, followed by compressing molding (hereinafter, also referred to as "primary molding"), and to form the resultant fiber sheets on the principal planes of the resin foam sheet into a predetermined shape, for example, a ceiling or a door by compression molding (hereinafter, also referred to as "secondary molding"). A resin foam sheet and fiber sheets disposed on principal planes on both sides of the resin foam sheet are integrated by primary molding to obtain a primary molded base, and the primary molded base is subjected to secondary molding to obtain a fiber-reinforced resin molded article formed into a predetermined shape.

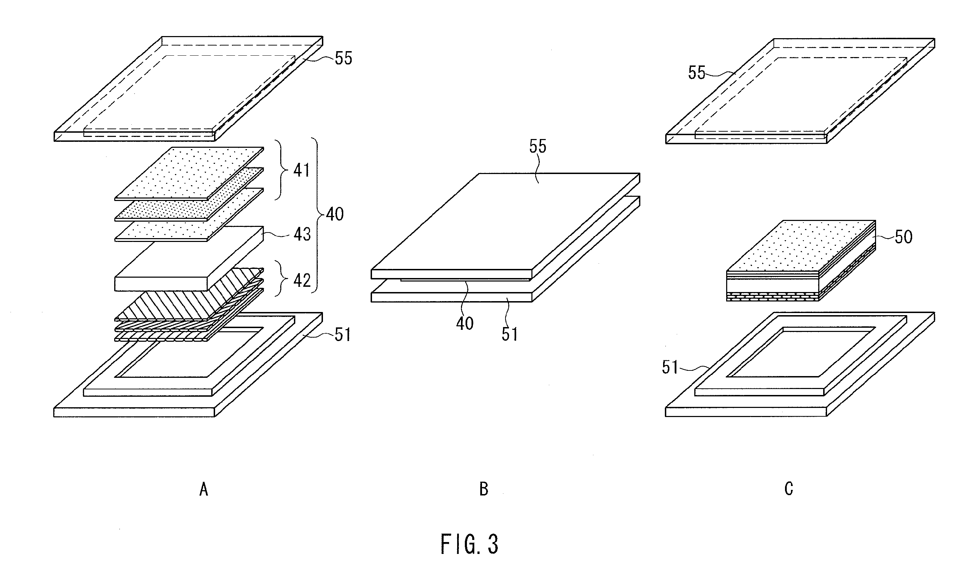

FIGS. 3A to 3C are schematic perspective views showing a primary molding process for producing a fiber-reinforced resin molded article. First, as shown in FIG. 3A, a fiber sheet 42, a resin foam sheet 43, and a fiber sheet 41 are laminated on a lower mold 51 in the stated order to form a laminate 40, and an upper mold 55 is disposed on the laminate 40. Next, as shown in FIG. 3B, the laminate 40 is pressed with a hot press machine. Then, the pressed laminate 40 is transferred to a cold press machine and further pressed to be integrated with the cold press machine. After that, as shown in FIG. 3C, the laminate 40 is removed from the molds to obtain a primary molded base 50. The compression molding can be performed under the following conditions. For example, the hot pressing is performed at a temperature of 125°C to 140°C and a molding pressure of 0.1 to 4 MPa for a molding time of 15 to 300 seconds, and the cold pressing is performed at a temperature of 25°C to 40°C and a molding pressure of 0.1 to 4 MPa for a molding time of 15 to 300 seconds. It should be noted that the thickness of the primary molded base 50 can be adjusted by disposing clearance spacers between the lower mold 51 and the upper mold 55.

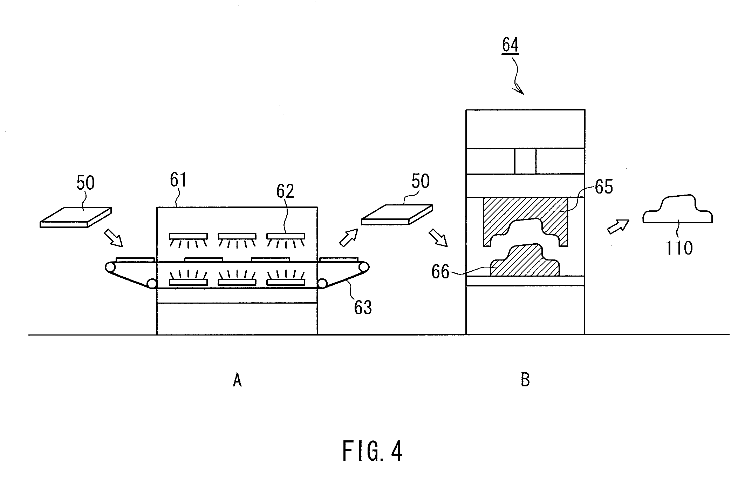

FIGS. 4A and 4B are schematic perspective views showing a secondary molding process for producing a fiber-reinforced resin molded article. First, as shown in FIG. 4A, the primary molded base 50 cut to a predetermined size is supplied from a conveyer 63 to a heating furnace 61. The heating furnace 61 is heated to a predetermined temperature with an infrared heater 62 serving as a heating source, and the primary molded base 50 is softened by heating. Next, as shown in FIG. 4B, the preheated primary molded base 50 is disposed between an upper mold 65 and a lower mold 66 of a compression molding device 64. The upper mold 65 and the lower mold 66 are held at a predetermined temperature. When the upper mold 65 is lowered, the primary molded base 50 between the upper mold 65 and the lower mold 66 is formed into a predetermined shape by compression molding to become a fiber-reinforced resin molded article 110. In the above-description, it is appropriate that the preheating temperature is a temperature equal or more than a melting point of a low melting point polymer component and less than a melting point of a high melting point polymer component. The preheating temperature is, for example, 110°C to 150°C, preferably 130°C to 140°C. Further, compression molding can be performed under the following conditions: for example, a temperature of 125°C to 140°C, a molding pressure of 0.1 to 4 MPa, and a molding time of 30 to 300 seconds.

A skin material further may be attached to the surface of the fiber-reinforced resin molded article. Further, a back surface material also may be attached to a surface on an opposite side of the skin material. It should be noted that the skin material and the back surface material also can be attached to the fiber-reinforced resin molded article simultaneously during compression molding. For example, the glass fiber nonwoven fabric and the skin material are subjected to thermal compression molding with an adhesive film interposed therebetween, whereby the skin material can be attached to the glass fiber nonwoven fabric. The skin material and the back surface material are not particularly limited as long as they are used for an interior material for a vehicle, and for example, a polyester nonwoven fabric, a polyester knitted fabric, and a nylon nonwoven fabric can be used.

### Examples

The present invention is specifically described by way of the following examples. It should be noted that the present invention is not limited to the following examples.

### (Example 1)

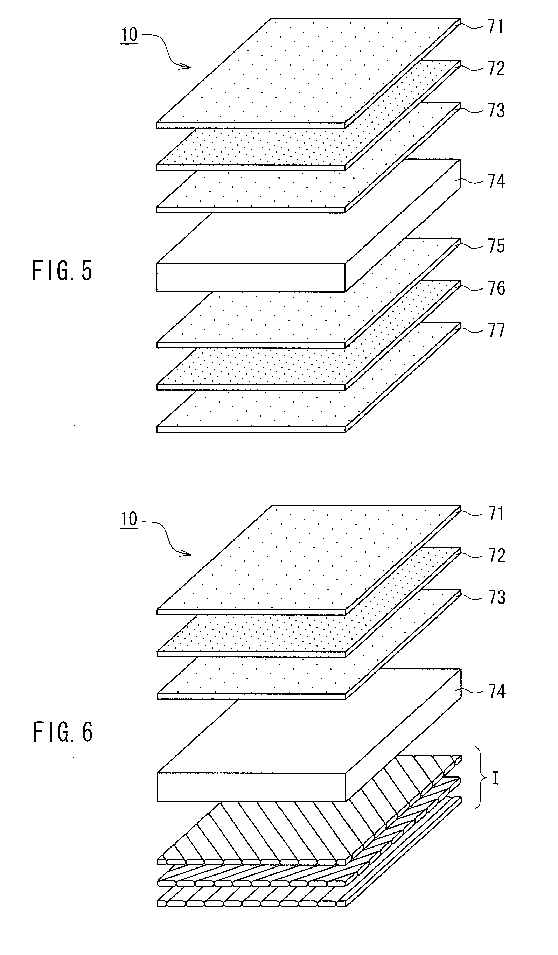

As shown in FIG. 5, an adhesive film 77, a glass fiber nonwoven fabric 76, an adhesive film 75, a resin foam sheet 74, an adhesive film 73, a glass fiber nonwoven fabric 72, and an adhesive film 71 were disposed in the stated order to obtain a laminate having a thickness of 4.4 mm. Next, the obtained laminate was inserted into a mold and subjected to hot pressing at 130°C for 30 seconds under a pressure of 1 MPa. Then, the resultant laminate was subjected to cold pressing at 20°C for 120 seconds to be integrated to obtain a primary molded base having a thickness of 4 mm. The obtained primary molded base was subjected to a heat treatment at 130°C for 60 seconds. Then, the primary molded base was disposed in a mold having a predetermined shape and treated in a compression molding device at 40°C for 60 seconds, whereby a fiber-reinforced resin molded article formed into a predetermined shape as shown in FIG. 8 was obtained. As the resin foam sheet, "P-Block" (expansion ratio: 45 times, thickness: 4 mm, density: 0.02 g/cm³) manufactured by JSP was used; as the glass fiber nonwoven fabric, a glass fiber surface mat ("FC-30SK" manufactured by Central Glass Co., Ltd., mass per unit area: 30 g/m², fiber length: about 20 mm, thickness: 0.1 mm) was used; and as the adhesive film, a low density polyethylene film (LDPE film, thickness: 50 µm) was used. As shown in FIGS. 8A and 8B, a fiber-reinforced resin molded article 200 of Example 1 included glass fiber nonwoven fabrics 201, 203 were disposed on principal planes on both sides of a resin foam sheet 202.

### (Example 2)

### <Production Example 1 of multiaxial warp knitted fabric>

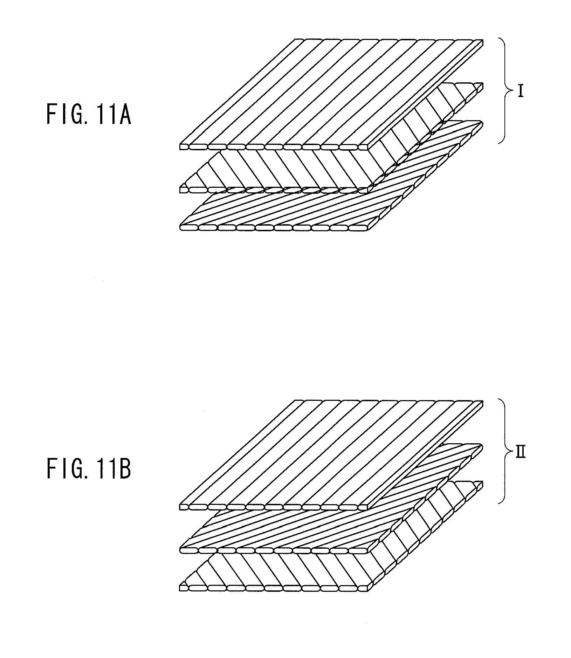

A multifilament yarn having a total fineness of 1850 dtex obtained by aligning 240 core-sheath type fibers (elastic modulus: 7.8 GPa, core component/sheath component mass ratio: 65/35), made of polypropylene (PP) having a melting point of 165°C as a core component and polyethylene (PE) having a melting point of 110°C as a sheath component therearound, in parallel was used as a conjugate fiber. The obtained multifilament yarns (conjugate fibers) having a total fineness of 1850 dtex were arranged in 3 yarns per inch in one direction to form a monolayer, with the result that a unidirectional sheet was obtained. The obtained 3 unidirectional sheets were laminated so that an angle of fibers between the respective layers became 60° as shown in FIG. 11A, and the laminate was integrated by stitching in a thickness direction with a stitching yarn (polypropylene yarn, fineness: 84 dtex) to obtain a multiaxial warp knitted fabric I. The mass per unit area of each unidirectional sheet was about 22 g/m², the mass per unit area of the multiaxial warp knitted fabric I was about 70 g/m², and the thickness was about 0.5 mm. It should be noted that a switching yarn is not shown in FIG. 11A.

### <Fiber-reinforced resin molded article>

As shown in FIG. 6, the multiaxial warp knitted fabric I, a resin foam sheet 74, an adhesive film 73, a glass fiber nonwoven fabric 72, and an adhesive film 71 were disposed in the stated order to obtain a laminate having a thickness of 4.7 mm. The obtained laminate was inserted into a mold. The laminate was subjected to hot pressing at 130°C for 30 seconds under a pressure of 1 MPa and thereafter subjected to cold pressing at 20°C for 120 seconds, thereby being integrated to obtain a primary molded base having a thickness of 4 mm. The obtained primary molded base was subjected to a heat treatment at 130°C for 60 seconds and disposed on a mold having a predetermined shape. Then, the primary molded base was treated at 40°C for 60 seconds in a compression molding device to obtain a fiber-reinforced resin molded article formed into a predetermined shape as shown in FIG. 9. It should be noted that the multiaxial warp knitted fabric I was used upside down. In the fiber-reinforced resin molded article 200 of Example 2, the glass fiber nonwoven fabric 201 was disposed on one principal plane of the resin foam sheet 202, and the multiaxial warp knitted fabric 204 was disposed on the other principal plane thereof, as shown in FIGS. 9A and 9B.

### (Comparative Example 1)

### <Production Example 2 of multiaxial warp knitted fabric>

A multifilament yarn having a total fineness of 1850 dtex obtained by aligning 240 core-sheath type fibers (elastic modulus: 7.8 GPa, core component/sheath component mass ratio: 65/35), made of polypropylene (PP) having a melting point of 165°C as a core component and polyethylene (PE) having a melting point of 110°C as a sheath component therearound, in parallel was used as a conjugate fiber. The obtained multifilament yarns (conjugate fibers) having a total fineness of 1850 dtex were arranged in 3 yarns per inch in one direction to form a monolayer, with the result that a unidirectional sheet was obtained. The obtained 3 unidirectional sheets were laminated so that an angle of fibers between the respective layers became 60° as shown in FIG. 11B, and the laminate was integrated by stitching in a thickness direction with a stitching yarn (polypropylene yarn, fineness: 84 dtex) to obtain a multiaxial warp knitted fabric II. The mass per unit area of each unidirectional sheet was about 22 g/m², the mass per unit area of the multiaxial warp knitted fabric II was about 70 g/m², and the thickness was about 0.5 mm. It should be noted that a stitching yarn is not shown in FIG. 11B.

### <Fiber-reinforced resin molded article>

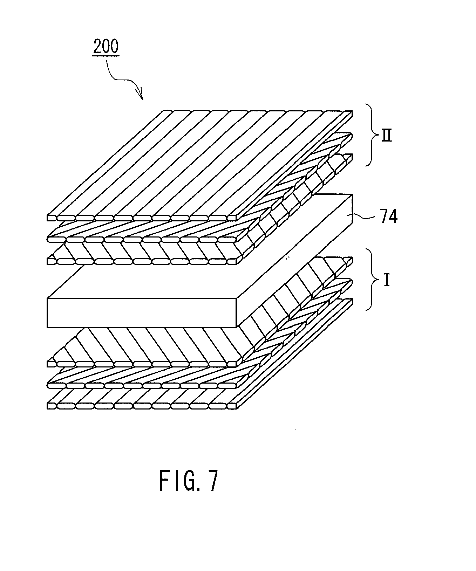

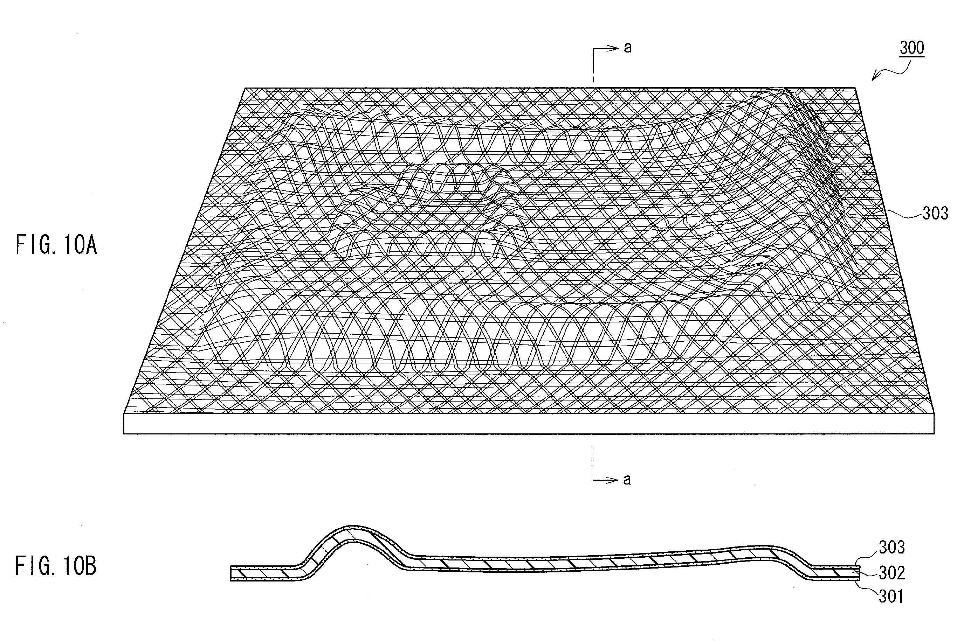

As shown in FIG. 7, the multiaxial warp knitted fabrics I, II were disposed on principal planes on both sides of the resin foam sheet 74 to obtain a laminate having a thickness of 5 mm. Next, the obtained laminate was inserted into a mold. The laminate was subjected to hot pressing at 130°C for 30 seconds under a pressure of 1 MPa and thereafter subjected to cold pressing at 20°C for 120 seconds, thereby being integrated to obtain a primary molded base having a thickness of 4 mm. The obtained primary molded base was subjected to a heat treatment at 130°C for 60 seconds and disposed on a mold having a predetermined shape. Then, the primary molded base was treated at 40°C for 60 seconds in a compression molding device to obtain a fiber-reinforced resin molded article formed into a predetermined shape as shown in FIG. 10. It should be noted that the multiaxial warp knitted fabric I was used upside down. In a fiber-reinforced resin molded article 300 of Comparative Example 1, as shown in FIGS. 10A and 10B, multiaxial warp knitted fabrics 301, 303 were disposed on principal planes on both sides of the resin foam sheet 302.

The bending elastic modulus (MPa), bending strength (MPa), and bending elastic gradient (N/cm) of the fiber-reinforced resin molded articles of the examples and comparative examples were measured as follows, and Table 1 shows the results. Further, the moldability of the fiber-reinforced resin molded articles of the examples and the comparative examples were evaluated as follows, and Table 1 shows the results. It should be noted that, in the case of using a fiber-reinforced resin molded article as an interior material for a vehicle, the bending elastic gradient may be 25 N/cm or more.

### (Bending elastic modulus and bending strength)

The bending elastic modulus and bending strength of a specimen having a width of 50 mm and a length of 150 mm were measured by performing a three-point bending test on the specimen according to JIS K 7055:1995.

### (Bending elastic gradient)

The bending elastic gradient (stiffness ratio) refers to a resistance to a load applied in a thickness direction, and was measured as follows. Initially, a three-point bending test was performed on a specimen having a width of 50 mm and a length of 150 mm according to JIS K 7221-2 at a test rate of 50 mm/min with a span length of 100 mm. Then, using a load (N)-deflection (cm) curve thus obtained, the elastic gradient (N/cm) was calculated from a tangent to the curve at a point where the curve had the largest gradient.

### (Moldability)

Moldable: the number of winkles is small both in a flat portion and a corner portion of a fiber-reinforced resin molded article

Imperfect molding: Wrinkles caused by stretching are formed in a flat portion of a fire-reinforced resin molded article, and folded wrinkles are formed in a corner portion thereof.

**[Table 1]**

| | Mass per unit area (g/m²) | Bending elastic modulus (MPa) | Bending strength (MPa) | Bending elastic gradient (N/cm) | Moldability |
|---|---|---|---|---|---|
| Example 1 | 340 | 203 | 0.97 | 28 | Moldable |
| Example 2 | 285 | 258 | 1.01 | 37 | Moldable |
| Comparative Example 1 | 225 | 274 | 0.98 | 35 | Imperfect molding |

It was found from Table 1 that the bending elastic gradient of Examples 1 and 2 is 25 N/cm or more and hence the fiber-reinforced resin molded articles of Examples 1 and 2 may be used as an interior material for a vehicle. It was also found that, in Examples 1 and 2 in which a glass fiber nonwoven fabric was disposed on the surface of a resin foam sheet, wrinkles can be prevented from being formed on the surface, and moldability was satisfactory. Further, as was understood from the comparison between FIGS. 8 and 9, in the case where a multiaxial warp knitted fabric was disposed on one principal plane of a resin foam sheet, and a glass fiber surface mat was disposed on the other principal plane, moldability was satisfactory without causing cracking during deep drawing molding.

### Industrial Applicability

The fiber-reinforced resin molded article of the present invention is suitable as interior materials for vehicles such as automobiles, in particular, ceiling materials for vehicles, interior materials for ships, interior materials for houses, and the like.

### Description of reference numerals

- 1, 3, 41, 42: fiber sheet
- 2, 43, 74: resin foam sheet
- 10,110, 200, 300: fiber-reinforced resin molded article
- 20, 204, 301, 303, I, II: multiaxial warp knitted fabric
- 21a to 21f: conjugate fiber (yarn) for fiber-reinforced resin
- 26: knitting needle
- 27, 28: stitching yarn
- 40: laminate
- 50: primary molded base
- 51, 66: lower mold
- 55, 65: upper mold
- 61: heating furnace
- 62: infrared heater
- 63: conveyer
- 64: compression molding device
- 71, 73, 75, 77: adhesive film
- 72, 76, 201, 203: glass fiber nonwoven fabric

## Claims

1. A fiber-reinforced resin molded article comprising a fiber sheet and a resin foam sheet attached to each other,
wherein the fiber sheet is disposed on a principal plane on each side of the resin foam sheet, and at least one of the fiber sheets is formed of a glass fiber nonwoven fabric.

2. The fiber-reinforced resin molded article according to claim 1, wherein the other fiber sheet of the fiber-reinforced resin molded article is a multiaxial warp knitted fabric.

3. The fiber-reinforced resin molded article according to claim 1 or 2, wherein the resin foam sheet is a polyolefin foam sheet.

4. An interior material for a vehicle formed of the fiber-reinforced resin molded article according to any one of claims 1 to 3.

5. The interior material for a vehicle according to claim 4, wherein the interior material for a vehicle is a ceiling material for a vehicle.
